# EUROPÄISCHE PATENTANMELDUNG

(11) **EP 1 431 857 A2**
(43) Veröffentlichungstag der Anmeldung: **23.06.2004**
(21) Anmeldenummer: 03027548.1
(22) Anmeldetag: 01.12.2003
(51) Int. Cl.: G05D 16/10

(54) **Druckminderer - Baugruppe**

(30) Priorität: 17.12.2002 DE 10259205
(71) Anmelder: HANS SASSERATH & CO KG, 41352 Korschenbroich (DE)
(72) Erfinder: Hecking, Willi, 41238 Mönchengladbach (DE)
(74) Vertreter: Weisse, Renate Dr.

(57) **Zusammenfassung**

Die Erfindung betrifft eine Druckminderer-Baugruppe (10) mit einem feststehenden Ventilteller (38) und einem mit dem Ventilteller (38) zusammenwirkenden Ventilsitzkörper, der von einem mit dem Ausgangsdruck in Schließrichtung beaufschlagten Hubglied gegen die Wirkung einer Vorlast verstellbar ist. Es soll eine solche Druckminderer-Baugruppe einfach und kompakt ohne Membran aufgebaut werden, die patronenartig in unterschiedliche Gehäuse einsetzbar ist. Zu diesem Zweck weist das Hubglied einen ringförmigen Zylinderkörper (14) auf, der einerseits als Ventilsitzkörper einen Ventildurchgang (28) und auf seiner dem Ventilteller (38) zugewandten Seite einen Ventilsitz (30) bildet und der andererseits als Hubglied auf der anderen Seite von dem Auslaßdruck beaufschlagt ist. Zur Druckentlastung ist mit dem das Hubglied bildenden Zylinderkörper (14) ein zweiter ringförmiger Zylinderkörper (16) im Abstand über Stege verbunden ist, wobei der Raum (18) zwischen den beiden Zylinderkörpern (14,16) von dem Einlaßdruck beaufschlagt ist. Eine zentrale, feststehende Spindel (34) in dem Raum (18) zwischen den ringförmigen Zylinderkörpern (14,16) trägt den Ventilteller (38).

## Beschreibung

Die Erfindung betrifft eine Druckminderer-Baugruppe mit einem feststehenden Ventilteller und einem mit dem Ventilteller zusammenwirkenden Ventilsitzkörper, der von einem mit dem Ausgangsdruck in Schließrichtung beaufschlagten Hubglied gegen die Wirkung einer Vorlast verstellbar ist.

Druckminderer dienen dazu, einen Ausgangsdruck einer Flüssigkeit auf einen vorgegebenen Wert zu begrenzen. Sie enthalten ein Ventil, das von einem Hubglied gesteuert ist. Das Hubglied, üblicherweise eine Membran wird vom Ausgangsdruck gegen die Wirkung einer Vorlast, üblicherweise einer Feder beaufschlagt. Wenn der Ausgangsdruck steigt, wird das Ventil durch das Hubglied stärker gedrosselt. Wenn der Ausgangsdruck sinkt, wird das Ventil weiter geöffnet. Druckminderer sind üblicherweise in einem Gehäuse mit einem Einlaß und einem Auslaß integriert. In das Gehäuse ist die als Hubglied dienende Membran eingespannt.

Es sind Druckminderer bekannt, bei denen der Ventilteller des Ventils feststehend, d.h. gehäusefest angeordnet sind, während durch eine als Hubglied dienende Membran ein den Ventilsitz bildender Ventilsitzkörper relativ zu dem feststehenden Ventilteller beweglich ist. Bei einem solchen Druckminderer ist der Ventilteller über Stege im Gehäuse gehalten. Der Ventilsitzkörper ist hülsenförmig ausgebildet und verschiebbar in einer Gehäusezwischenwand geführt. Der Ventilsitzkörper ist über Stege mit einer zentralen, abdichtend durch den Ventilteller hindurchgeführten Spindel verbunden, die an einer das Hubglied bildenden, im Gehäuse eingespannten, federbelasteten Membran befestigt ist. Wasser strömt über einen Einlaß auf einer Seite der Zwischenwand zu, tritt durch den hülsenförmigen Ventilsitzkörper hindurch und durch den zwischen dem Ventilsitzkörper und den Ventilteller gebildeten Ringspalt und fließt auf der anderen Seite der Zwischenwand zu einem Auslaß. Dabei wirkt der Auslaßdruck auf die Membran. Bei ansteigendem Auslaßdruck wird der Ventilsitzkörper in Richtung auf den feststehenden Ventilteller bewegt und der Ringspalt stärker gedrosselt. Bei absinkendem Auslaßdruck wird der Ringspalt entsprechend weiter geöffnet.

Eine solche Anordnung ist sehr aufwendig. Die bekannte Anordnung ist in ein ganz bestimmtes Gehäuse integriert. Membranen sind im Langzeitbetrieb störanfällig.

Der Erfindung liegt die Aufgabe zugrunde, eine Druckminderer-Baugruppe einfach und kompakt aufzubauen.

Der Erfindung liegt weiter die Aufgabe zugrunde, eine Druckminderer-Baugruppe ohne Membran zu schaffen.

Der Erfindung liegt schließlich die Aufgabe zugrunde, eine in sich geschlossene Druckminderer-Baugruppe zu schaffen, die patronenartig in unterschiedliche Gehäuse einsetzbar sind, sofern diese nur einen für die Aufnahme der Baugruppe geeigneten Hohlraum mit Einlaß und Auslaß bilden.

Erfindungsgemäß werden diese Aufgaben dadurch gelöst, daß das Hubglied einen ringförmigen Zylinderkörper aufweist, der einerseits als Ventilsitzkörper einen Ventildurchgang und auf seiner dem Ventilteller zugewandten Seite einen Ventilsitz bildet und der andererseits als Hubglied auf der anderen Seite von dem Auslaßdruck beaufschlagt ist.

Nach der Erfindung wird ein ringförmiger Zylinderkörper verwendet, der zugleich zwei Funktionen erfüllt: Einmal ist er das Hubglied, das von dem Ausgangsdruck beaufschlagt ist und gegen die Vorlast einen Regelhub ausführt. Zum anderen bildet er einen Ventilsitzkörper mit einem Ventildurchgang und einem Ventilsitz, der zusammen mit dem feststehenden Ventilteller ein Regelventil bildet.

Vorzugsweise ist zur Druckentlastung mit dem das Hubglied bildenden Zylinderkörper ein zweiter ringförmiger Zylinderkörper im Abstand über Stege verbunden, wobei der Raum zwischen den beiden Zylinderkörpern von dem Einlaßdruck beaufschlagt ist.

Die Zylinderkörper sind in einer Gehäusebohrung geführt, wobei ein Einlaßkanal in den Raum zwischen den beiden Zylinderkörpern mündet. Der Einlaßdruck wirkt dann in entgegengesetzten Richtungen auf die beiden miteinander verbundenen Zylinderkörper, so daß eine Druckentlastung eintritt und der Hub des Hubgliedes nicht vom Einlaßdruck beeinflußt ist.

Eine zentrale, feststehende Spindel kann in dem Raum zwischen den ringförmigen Zylinderkörpern den Ventilteller tragen. An der Spindel kann ein Führungskörper sitzen, der abdichtend in dem zweiten ringförmigen Zylinderkörper geführt ist und in dem Ventilkörper ausläuft. Die Spindel kann im Abstand von dem zweiten ringförmigen Zylinderkörper ein Federwiderlager tragen, wobei zur Erzeugung der Vorlast eine Schraubenfeder vorgesehen ist, welche sich um die Spindel erstreckt, auf den Zylinderkörper wirkt und sich an dem Federwiderlager abstützt. Dabei sind vorteilhafterweise die Außendurchmesser der beiden ringförmigen Zylinderkörper gleich und der Querschnitt des Führungskörpers ist gleich dem Querschnitt des Ventildurchgangs. Die beiden Zylinderkörper können Umfangsnuten mit Dichtringen aufweisen.

Ein Ausführungsbeispiel der Erfindung ist nachstehend unter Bezugnahme auf die zugehörigen Zeichnungen näher erläutert.
- Fig.1: zeigt einen Längsschnitt durch einen Druckminderer mit einer Druckminderer-Baugruppe in einem dafür geeigneten Gehäuse, wobei die Zylinderkörper durch den Ausgangsdruck nach oben gedrückt sind und der Ventilsitz an dem feststehenden Ventilteller anliegt.
- Fig.2: zeigt einen Längsschnitt ähnlich Fig.1 mit geöffnetem Regelventil.

Eine patronenartige Druckminderer-Baugruppe 10 ist in einem Gehäuse 12 angeordnet.

Die Druckminderer-Baugruppe 10 weist einen ersten ringförmigen, flachen Zylinderkörper 14 und einen zweiten ringförmigen, flachen Zylinderkörper 16 auf. Die beiden Zylinderkörper 14 und 16 sind durch axiale Stege, die in der Figur nicht dargestellt sind, miteinander verbunden. Zwischen den beiden im Abstand voneinander angeordneten Zylinderkörpern 14 und 16 ist eine Einlaßkammer 18 gebildet. Die beiden Zylinderkörper 14 und 16 haben gleiche Außendurchmesser. Auf den Mantelflächen der Zylinderkörper 14 und 16 sind Umfangsnuten 20 und 22 gebildet. In den Umfangsnuten 20 und 22 sitzen Dichtringe 24 bzw. 26.

Der erste Zylinderkörper 14 weist einen zentralen Ventildurchgang 28 auf. Auf der dem zweiten Zylinderkörper 16 und der Einlaßkammer zugewandten Seite bildet der erste Zylinderkörper 14 einen Ventilsitz 30.

Der zweite Zylinderkörper 16 weist einen zentralen Durchbruch 32 auf. Eine zentrale, feststehende Spindel 34 trägt an ihrem Ende einen Führungskörper 36. Der Führungskörper 36 erstreckt sich durch den Durchbruch 32 und trägt einen Ventilteller 38. Der Ventilteller 38 sitzt in der Einlaßkammer 18 zwischen den Zylinderkörpern 14 und 16. Eine Schraubenfeder 40 umgibt die Spindel 34. Die Schraubenfeder 40 stützt sich an einem auf der Spindel sitzenden Widerlager 42 ab. Die Schraubenfeder 40 drückt über eine Buchse 44 auf die miteinander verbundenen Zylinderkörper 14 und 16. Die Buchse 44 ist mit einer Dichtung 46 abdichtend auf dem Führungskörper 36 geführt.

Diese bisher beschriebene Druckminderer-Baugruppe 10 sitzt in dem Gehäuse 12. Das Gehäuse 12 besteht aus einem Gehäuseunterteil 48 und einer Kappe 50.

Das Gehäuseunterteil 48 weist fluchtend einen Einlaß 52 und einen Auslaß 54. Senkrecht zu den Achsen von Einlaß 52 und Auslaß 54 weist das Gehäuseunterteil 48 eine zylindrische Bohrung 56 auf. Die Bohrung 56 steht mit dem Auslaß 54 in Verbindung. In diese Bohrung ist die Druckminderer-Baugruppe 10 eingesetzt. Dabei sind die miteinander verbundenen, ringförmigen Zylinderkörper 14 und 16 mit den Dichtringen 24 bzw. 26 abdichtend in der Bohrung 56 geführt. Das Gehäuseunterteil 48 weist ferner einen Verbindungskanal 58 auf. Der Verbindungskanal 58 mündet in der Bohrung 56 zwischen den Zylinderkörpern 14 und 16 und verbindet so den Einlaß 52 mit der Einlaßkammer 18. Die Außendurchmesser der beiden ringförmigen Zylinderkörper 14 und 16 sind gleich und der Querschnitt des Führungskörpers 36 ist gleich dem Querschnitt des Ventildurchgangs 28. Auf diese Weise wirkt der Einlaßdruck auf gleichen Flächen einmal nach unten in der Figur auf den ersten Zylinderkörper 14 und zum anderen nach oben in der Figur auf den zweiten Zylinderkörper 16. Der Eingangsdruck übt daher auf die beiden miteinander verbundenen Zylinderkörper 14 und 16 keine resultierende Kraft aus.

Die Kappe 50 deckt die Spindel 34 mit der Feder 40 ab. Mit 60 ist ein üblicher Stellmechanismus zur Einstellung der Vorspannung der Feder 40 bezeichnet.

Die beschriebene Druckminderer-Baugruppe arbeitet wie folgt:

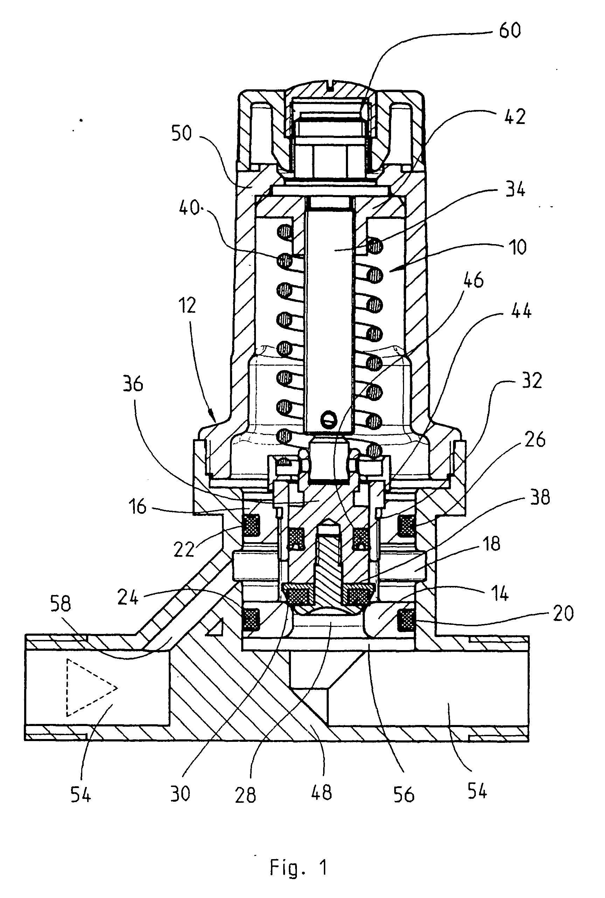

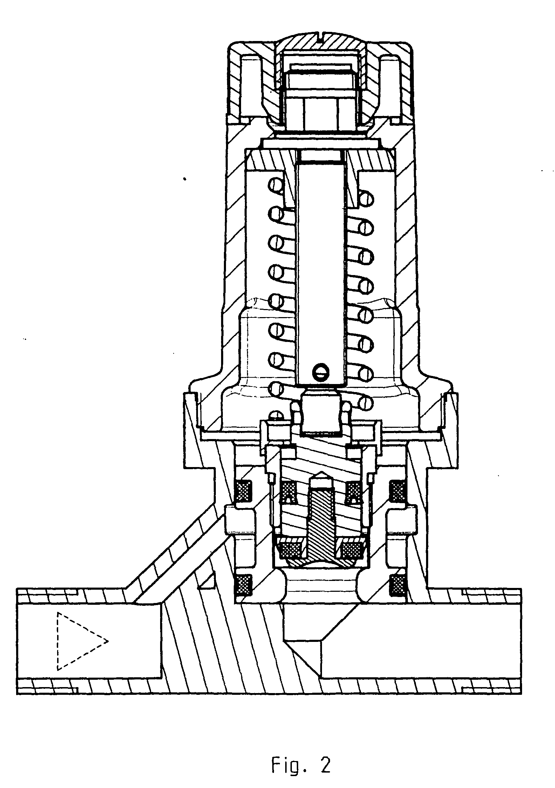

Der Ausgangsdruck im Ausgang 54 wirkt auf die ringförmige "untere" Stirnfläche des ersten Zylinderkörpers 14 der Kraft der Schraubenfeder 40 entgegen. Dadurch werden die beiden Zylinderkörper nach "oben" in Fig.1 gedrückt. Der Ringspalt des Regelventils zwischen dem feststehenden Ventilteller 38 und dem Ventilsitz 30 wird gedrosselt. Sinkt der Ausgangsdruck im Auslaß 54, dann wird die Kraft auf den Zylinderkörper 14 geringer. Die Kraft der Schraubenfeder 40 überwindet den Auslaßdruck und bewegt die Zylinderkörper 14 und 16 nach unten in Fig.1 und 2, also von dem feststehenden Ventilteller 38 weg. Dadurch wird der Ringspalt vergrößert, so daß der Ausgangsdruck wieder ansteigen kann. Der auf den Ventilteller wirksame Ausgangsdruck wird von der Spindel 34 und über diese vom Gehäuse 12 aufgenommen. Der Zylinderkörper 14 erfüllt somit gleichzeitig die Funktionen von Hubglied und Ventilsitzkörper.

## Patentansprüche

1. Druckminderer-Baugruppe (10) mit einem feststehenden Ventilteller (38) und einem mit dem Ventilteller (38) zusammenwirkenden Ventilsitzkörper, der von einem mit dem Ausgangsdruck in Schließrichtung beaufschlagten Hubglied gegen die Wirkung einer Vorlast verstellbar ist, **dadurch gekennzeichnet, daß** das Hubglied einen ringförmigen Zylinderkörper (14) aufweist, der einerseits als Ventilsitzkörper einen Ventildurchgang (28) und auf seiner dem Ventilteller (38) zugewandten Seite einen Ventilsitz (30) bildet und der andererseits als Hubglied auf der anderen Seite von dem Auslaßdruck beaufschlagt ist.

2. Druckminderer-Baugruppe nach Anspruch 1, **dadurch gekennzeichnet, daß** zur Druckentlastung mit dem das Hubglied bildenden Zylinderkörper (14) ein zweiter ringförmiger Zylinderkörper (16) im Abstand über Stege verbunden ist, wobei der Raum (18) zwischen den beiden Zylinderkörpern (14,16) von dem Einlaßdruck beaufschlagt ist.

3. Druckminderer-Baugruppe nach Anspruch 2, **dadurch gekennzeichnet, daß** eine zentrale, feststehende Spindel (34) in dem Raum (18) zwischen den ringförmigen Zylinderkörpern (14,16) den Ventilteller (38) trägt.

4. Druckminderer-Baugruppe nach Anspruch 3, **dadurch gekennzeichnet, daß** an der Spindel (34) ein Führungskörper (36) sitzt, auf dem abdichtend der zweite ringförmigen Zylinderkörper (16) geführt ist und der den Ventilteller (38) trägt.

5. Druckminderer-Baugruppe nach Anspruch 3 oder 4, **dadurch gekennzeichnet, daß** die Spindel (34) im Abstand von dem zweiten ringförmigen Zylinderkörper (16) ein Federwiderlager (42) trägt, wobei zur Erzeugung der Vorlast eine Schraubenfeder (40) vorgesehen ist, welche sich um die Spindel (34) erstreckt, auf den Zylinderkörper (16) wirkt und sich an dem Federwiderlager (42) abstützt.

6. Druckminderer-Baugruppe nach Anspruch 4 oder 5, **dadurch gekennzeichnet, daß** die Außendurchmesser der beiden ringförmigen Zylinderkörper (14,16) gleich sind und der Querschnitt des Führungskörpers (36) gleich dem Querschnitt des Ventildurchgangs (28) ist.

7. Druckminderer-Baugruppe nach einem der Ansprüche 1 bis 6, **dadurch gekennzeichnet, daß** die beiden Zylinderkörper (14,16) Umfangsnuten (20,22) mit Dichtringen (24,26) aufweisen.
